Europäisches Patentamt

European Patent Office

Office européen des brevets

(11) Veröffentlichungsnummer: **0 235 586**
A2

## (12) EUROPÄISCHE PATENTANMELDUNG

(21) Anmeldenummer: **87101334.8**

(22) Anmeldetag: **31.01.87**

(51) Int. Cl.⁴: **G 11 B 15/44**

(30) Priorität: **01.03.86 DE 3606769**

(43) Veröffentlichungstag der Anmeldung: **09.09.87**
**Patentblatt 87/37**

(84) Benannte Vertragsstaaten: **AT CH DE FR GB IT LI**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Schmidt, Erhard, Ing. grad., c/oGrundig EMV Max Grundig holl.Stiftung&Co KG, Kurgartenstr.37 D-8510 Fuerth/Bay. (DE)**

(54) **Video-Magnetbandgerät.**

(57) Beschrieben ist ein Video-Magnetbandgerät mit einem Antrieb der Bandwickelspulenmitnehmer durch nur einen Antriebsmotor, der über ein schwenkbares Zwischenrad auf die Bandwickelspulenmitnehmer einwirkt, und deren wechselweiser Antrieb durch Drehrichtungsänderung des Antriebsmotors bewirkt wird. Während des unmittelbaren Vorgangs, der zum wechselweisen Antrieb der Bandführungsspulenmitnehmer führt, durchläuft das Zwischenrad eine Rollbahn, die auf einem Schwenkhebel angeordnet ist. Der Schwenkhebel wird hierbei zwangsläufig verschwenkt, und über diesen Bewegungsvorgang sind kraftschlüssige Geräteschaltvorgänge in einfachster Weise zu steuern.

3

# VIDEO-MAGNETBANDGERÄT

## BESCHREIBUNG

Es sind Bandgeräte zur Tonaufzeichnung und Wiedergabe bekannt, die Teilfunktionen des Gerätes durch Stromgabe und
Stromumpolung des Antriebsmotors steuern. So ist aus der
DE-PS 828 923 und aus dem deutschen Gebrauchsmuster 1 730 790
eine Einrichtung zur Steuerung eines Tonbandgerätes bekannt,
bei der das Umspulen des bandförmigen Tonträgers durch Stromumpolung und somit Drehrichtungsänderung des Antriebsmotors
gesteuert wird. Bei diesen bekannten Ausführungen wird ein
Zwischenrad um die Antriebswelle des Motors verschwenkt und
gelangt abhängig von der Drehrichtung des Motors mit dem
Auf- oder Abwickelspulenmitnehmer in Eingriff. Hierzu ist
das Zwischenrad vorzugsweise auf einem zentrisch zu einem
Antriebsrad, das auf der Motorwelle aufgesetzt ist, drehbar
gelagerten Schwenkhebel angeordnet, wobei zwischen Schwenkhebel und Antriebsrad ständig ein Reibschluß besteht. Ferner
ist auch eine Einrichtung bekannt, bei der das in gleicher
Weise auf einem Schwenkhebel angeordnete Zwischenrad während

4

des Schwenkvorgangs eine gerätefest angeordnete Rollbahn durchläuft. Hierdurch ist eine kraftaufwendige Gerätefunktion schaltbar. Die Kraftumsetzung geschieht über eine aufwendig auf dem Schwenkhebel angebrachte Steuerkurve. Weiterhin sind bei einem derartigen Getriebeaufbau Maßnahmen erforderlich, die verhindern, daß das freie Ineinandergreifen der Getriebeteile, z. B. eines verzahnten Zwischenrades in die verzahnte Rollbahn, zu einem unbeabsichtigten Versperren des Getriebes führt.

Der Erfinder hat sich deshalb die Aufgabe gestellt, bei Geräten der eingangs näher bezeichneten Gattung diesen Nachteil zu beseitigen und eine Einrichtung zu schaffen, die in einfachster Weise es ermöglicht, daß gleichzeitig durch die Laufrichtungsänderung des einzigen Antriebsmotors, der für den Antrieb beider Bandwickelspulenmitnehmer in einem Videogerät vorgesehen ist, ohne wesentlichen zusätzlichen Teileaufwand, ein beliebiges kraftaufwendiges Steuerteil im Gerät zu betätigen ist.

Diese Aufgabe wird erfindungsgemäß durch die im Kennzeichen des Patentanspruchs 1 angegebenen Merkmale gelöst.

Die Erfindung wird nachfolgend anhand der Zeichnungen erläutert.

Fig. 1     ist eine vereinfachte Draufsicht auf die erfindungswesentlichsten Antriebsteile der Bandwickelspulenmitnehmer eines Video-Magnetbandgerätes,

Fig. 2    ist eine Ansicht ähnlich der Fig. 1, jedoch
         mit einer veränderten Lage der Wickelspulenmitnehmer-Antriebsteile.

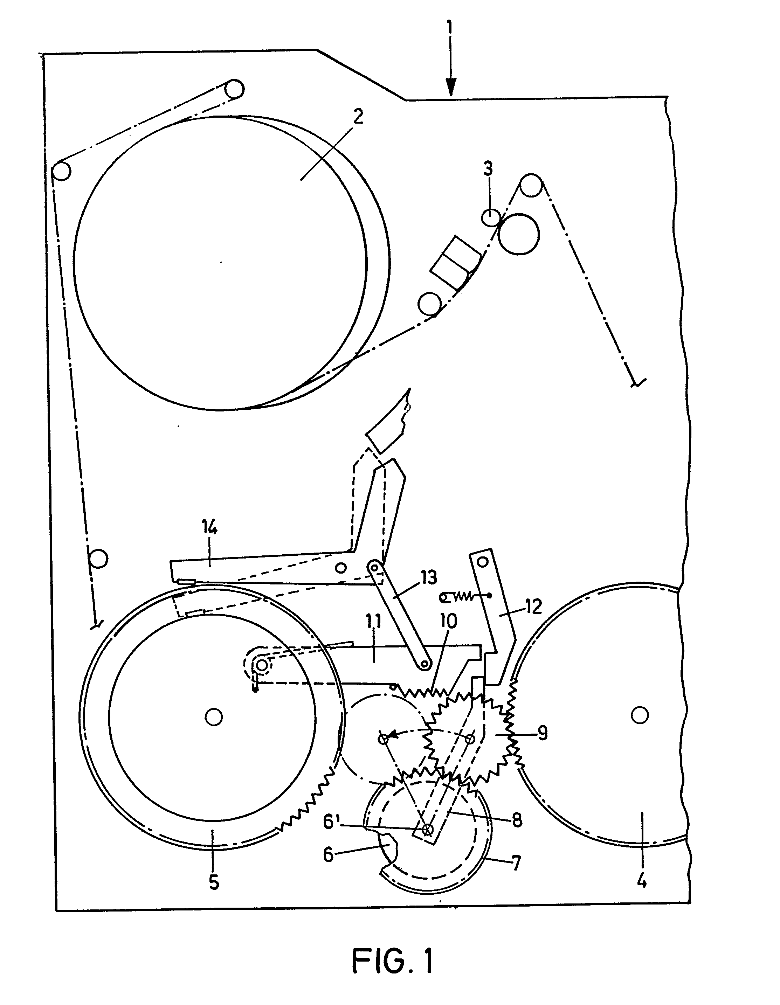

Die Fig. 1 zeigt in sehr vereinfachter Darstellung ein
Video-Magnetbandgerät 1, das im wesentlichen aus einer
Kopftrommel 2, einem Capstan-Antrieb 3, zwei wechselweise
antreibbaren Bandwickelspulenmitnehmern, die kurz als
Wickelteller 4 und 5 bezeichnet werden, sowie einem Bandwickel-Antriebsmotor 6 besteht. Alle übrigen Steuer- und
Antriebsteile sowie Bandkassette und andere Teile sind aus
Gründen der Übersichtlichkeit nicht dargestellt. Auf der
Motorwelle 6' des Antriebsmotors 6 ist ein Zahnrad 7 aufgepreßt, und ein schwenkbarer Hebel 8 ist ebenfalls auf
der Motorwelle oder in Verlängerung zur Welle frei gelagert.
Bedarfsweise ist der Hebel 8 und die Motorwelle 6' noch
über eine einfache Friktionskupplung verbunden. Diese Kupplung kann z. B. aus nur einer Friktionsscheibe bestehen, die
auf einem Flansch an der Motorwelle anliegt und einen Reibschluß mit dem Hebel 8 bildet. In Eingriff zu dem Zahnrad 7,
das auf der Motorwelle 6' aufgesetzt ist, befindet sich ein
Zwischenrad 9, das drehbar auf dem Hebel gelagert ist. Die
Wickelteller 4 und 5 weisen am Umfang eine Verzahnung auf,
in die wechselweise das Zwischenrad 9 in Eingriff gebracht
werden kann. Abhängig von der Drehrichtung des Antriebsmotors 6
kommt das Zwischenrad 9 in Eingriff zum Wickelteller 4, wie
in Fig. 1 dargestellt, oder nach Drehrichtungsänderung des
Motors, siehe Pfeilrichtung, in Eingriff zum Wickelteller 5,
wie strichpunktiert in der Fig. 1 dargestellt ist.

Während des Schwenkvorgangs des Zwischenrades von der einen
Stellung in die andere durchläuft das Zwischenrad eine Rollbahn 10, die einem Schwenkhebel 11 zugeordnet ist. Der
Schwenkhebel 11 ist auf dem Gerätechassis gelagert. Die
Rollbahn 10 weist im dargestellten Beispiel eine Verzahnung
auf, in die das Zwischenrad 9 eingreift. Während das Zwischenrad 9 die Rollbahn 10 durchläuft, führt der Schwenkhebel 11 eine begrenzte Schwenkbewegung aus und kann hierbei
verschiedene Steuerteile im Gerät betätigen. Im dargestellten Beispiel wird eine Stoppbremse an den das Band abwickelnden Wickelteller angedrückt. Die Stoppbremse verbleibt im
gezeichneten Beispiel so lange am Wickelteller angelegt, bis
durch erneute Drehrichtungsänderung des Antriebsmotors die
Bremse freigegeben wird. Zur Sperrung der Stoppbremse wird
der Schwenkhebel 11 durch eine Sperrklinke 12 in seiner abgehobenen Lage gehalten und in dieser Lage verbleibt ein
über eine Koppelstange 13 mit dem Schwenkhebel verbundener
Bremshebel 14 in der den Bremsvorgang aufrechterhaltenden Lage.
Bei einer Drehrichtungsänderung des Antriebsmotors wird die
Sperrklinke 12 durch den Hebel 8 zurückgedrückt und der
Schwenkhebel 11 kann in seine Ausgangslage zurückfallen.
Die Ausgangslage des Schwenkhebels 11 wird durch eine nicht
näher dargestellte Feder, die mit geringem Druck auf den
Schwenkhebel einwirkt, sichergestellt. Desgleichen wirkt
eine nicht dargestellte Feder auf den Bremshebel ein.

Über den Schwenkhebel können natürlich auch andere, insbesondere kraftaufwendige Gerätefunktionen getätigt werden. Diese
hiermit geschalteten Gerätefunktionen können dann ebenfalls durch Drehrichtungsänderung des Antriebsmotors aufgehoben werden. Eine andere Möglichkeit des Aufhebens eines über den Schwenkhebel eingeleiteten Gerätesteuervorgangs besteht darin, daß z. B. ein leistungsschwacher Elektromagnet oder ein Tastenglied eine vorgenommene Verriegelung aufhebt, und der Schwenkhebel 11 nach dem kräfteaufwendigen Betätigen einer Gerätefunktion in seine Ausgangslage zurückkehrt.

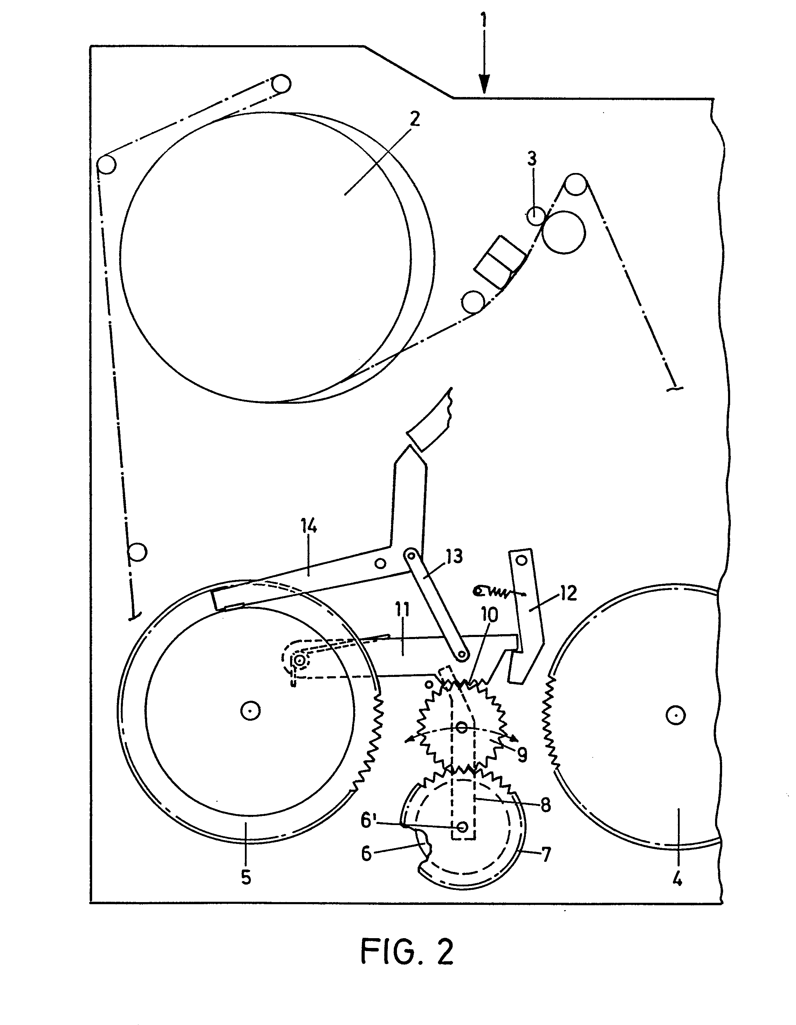

Die Fig. 2 zeigt den Schwenkhebel 11 in seiner weitgehendst verschwenkten Lage, wobei das Zwischenrad 9 sich noch innerhalb der Rollbahn 10 des Schwenkhebels befindet. Die Rollbahn 10 des Schwenkhebels kann verschiedene geometrische Formen erhalten, so kann sie als Gerade oder als Kreissegment geformt sein. Der Schwenkhebel 11 mit der Rollbahn 10 kann bedarfsweise als Schiebeteil mit Längsführungen ausgebildet sein.

VIDEO-MAGNETBANDGERÄT

PATENTANSPRÜCHE

1. Einrichtung zur Betätigung eines kraftaufwendigen Steuerteils in einem Kassetten-Videomagnetbandgerät während des Umschaltens vom Gerätevorlauf in den Geräterücklauf und umgekehrt, wobei das Gerät nur einen Antriebsmotor für den Antrieb von zwei Bandwickelspulenmitnehmern aufweist, und der Motor über ein um die Motorachse schwenkbares Zwischenrad in Eingriff zu den Bandwickelspulenmitnehmern steht, sowie der Bandvor- und Bandrücklauf durch direkte Drehrichtungsänderung (Stromumpolung) des Antriebsmotors vorgenommen wird, und das Zwischenrad während des Schwenkvorganges eine Rollbahn durchläuft, d a d u r c h  g e k e n n z e i c h - n e t ,  daß die Rollbahn (10) einem Schwenkhebel (11) zugeordnet ist, daß der Schwenkhebel beim Durchlauf des Zwischenrades (9) durch die Rollbahn eine begrenzte Schwenkbewegung ausführt, und daß durch den Schwenkhebel ein Steuerteil im Gerät betätigt wird.

2. Einrichtung nach Anspruch 1,  d a d u r c h  g e k e n n z e i c h n e t ,  daß nach Durchlauf des

2

2

0235586

Zwischenrades in einer vorgegebenen Richtung durch die
Rollbahn der Schwenkhebel (11) oder das Steuerteil in
einer bestimmten Lage gesperrt wird, und daß in der entgegengesetzten Laufrichtung die Sperrung aufgehoben wird.

3. Einrichtung nach Anspruch 1 und 2, d a d u r c h
g e k e n n z e i c h n e t , daß der Eingriff des Zwischenrades (9) zum Antriebsmotor und dem Band-Aufwickel-
oder -Abwickelspulenmitnehmer sowie der Rollbahn über einen
Reibschluß oder insbesondere Formschluß (Verzahnung) erfolgt.

FIG. 1

FIG. 2